# EUROPÄISCHE PATENTSCHRIFT

(11) **EP 2 921 608 B1**
(45) Veröffentlichungstag und Bekanntmachung des Hinweises auf die Patenterteilung: **20.12.2017**
(21) Anmeldenummer: 15159904.0
(22) Anmeldetag: 19.03.2015
(51) Int. Cl.: E04F 13/08, E04F 13/14, B32B 13/00, B32B 13/06, B32B 15/00, B32B 13/04, B32B 15/04, B32B 17/06, B32B 7/00, B32B 7/12, B32B 9/00

(54) **HALBZEUG-BAUELEMENT, BAUWERKSVERKLEIDUNG UND VERFAHREN ZUM VERKLEIDEN EINER AUßENWAND EINES GEBÄUDES**
SEMIFINISHED BUILDING ELEMENT, BUILDING CLADDING AND METHOD OF CLADDING AN EXTERIOR WALL OF A BUILDING
COMPOSANT DE SEMI-PRODUIT, REVÊTEMENT DE CONSTRUCTION ET PROCÉDÉ DESTINÉ À REVÊTIR UNE PAROI EXTÉRIEURE D'UN BÂTIMENT

(30) Priorität: 21.03.2014 DE 102014103944
(43) Veröffentlichungstag der Anmeldung: 23.09.2015
(73) Patentinhaber: Böe, Hans Peter, 46049 Oberhausen (DE)
(72) Erfinder: Böe, Hans Peter, 46049 Oberhausen (DE)
(74) Vertreter: von dem Borne, Andreas

(56) Entgegenhaltungen:
- EP-A1- 2 468 497
- DE-A1- 19 632 353
- DE-U1-202010 003 760
- DE-U1-202010 013 540

## Beschreibung

Die Erfindung betrifft ein Halbzeug-Bauelement für die Verkleidung einer Oberfläche eines Bauwerkes, insbesondere für die Verkleidung einer Außenwand eines Gebäudes.

Die Verkleidung von Oberflächen von Bauwerken, insbesondere von Außenwänden von Gebäuden ist in unterschiedlichsten Ausführungsformen bekannt. Dabei besteht ein besonderes Interesse, solche Oberflächen mit Glasscheiben oder ähnlichen Werkstoffen, z. B. Granit, Marmor, Kalksandstein, Feinsteinzeug oder auch mit Metall zu verkleiden.

Im Zusammenhang mit der Verkleidung von Oberflächen mit Glasscheiben kennt man ein Halbzeug-Bauelement, welches für die Verkleidung von Oberflächen eingerichtet ist und als Glas-Halbzeug ausgebildet ist. Ein solches bekanntes Halbzeug-Bauelement besteht aus einer Glasscheibe sowie einer auf der Glasscheibe angeordneten Verbundmörtelschicht, welche Verbundmörtelschicht aus einem feinteiligen neutralen Zuschlagsstoff und Zement besteht und mit einer wässrigen Dispersion eines Polyacrylsäurederivates angemacht ist (vgl. z. B. DE 196 32 353 A1). Dieses Halbzeug-Bauelement lässt sich mit der zu verkleidenden Oberfläche durch den Kontakt der Verbundmörtelschicht des Halbzeug-Bauelementes mit angemachtem und erhärtendem Beton oder auch mit Hilfe eines (wasserhaltigen) Klebers an der zu verkleidenden Wand befestigen. Damit wird ein Halbzeug-Bauelement auf Glasbasis zur Verfügung gestellt, welches sich in einfacher Weise an Oberflächen befestigen lässt, ohne dass z. B. Schraubverbindungen oder dergleichen realisiert werden müssen. Das bekannte Glas-Halbzeug kann insbesondere mit herkömmlichem Fliesenkleber bzw. Klebemörtel verarbeitet werden. Der Einsatz derartiger Glas-Halbzeug-Bauelemente hat sich in der Praxis sehr bewährt.

Außerdem ist es grundsätzlich bekannt, auf Außenwänden von Gebäuden Putzträgerplatten zu montieren, um anschließend eine gewünschte Oberflächenbeschichtung, wie z. B. einen Putz, aufzubringen. Solche Putzträgerplatten können z. B. als Zementbauplatten ausgebildet sein und aus Portlandzement mit Zuschlagsstoffen bestehen, die beidseitig mit einem Glasgittergewebe armiert ist. Alternativ zu solchen Putzträgerplatten auf Zementbasis sind auch Putzträgerplatten auf Calciumsilikatbasis und Putzträgerplatten aus Blähglasgranulat bekannt.

Die bekannten Glas-Halbzeug-Bauelemente lassen sich grundsätzlich auf den bekannten Putzträgerplatten befestigen. Die Befestigung herkömmlicher "einfacher" Glasscheiben bereitet jedoch in der Praxis Probleme. - Hier setzt die Erfindung ein.

Im Übrigen kennt man aus der DE 10 2011 109 659 A1 ein Halbzeug-Bauelement auf Holzbasis, welches aus einer Holzplatte und einer einseitig auf die Holzplatte aufgebrachten Verbundmörtelschicht besteht. Dieses Halbzeug-Bauelement wird folglich in ähnlicher Weise hergestellt und verarbeitet, wie die bekannten Halbzeug-Bauelemente auf Glasbasis.

Schließlich wird in der DE 200 02 603 U1 ein Bauwerksteil für die Verkleidung von Oberflächen beschrieben, welches ein Sichtflächenteil (z.B. in Form einer Glasscheibe) und ein Untergrundflächenteil aus Schaumglas aufweist. Das Sichtflächenteil (z.B. die Glasscheibe) ist unter Bildung eines Glas-Halbzeuges in bekannter Weise auf seiner Rückseite mit einer Verbundmörtelschicht versehen. Entsprechend ist auch die Vorderseite des Untergrundflächenteils aus Schaumglas mit einer solchen Verbundmörtelschicht beschichtet. Auch bei dem insoweit bekannten Bauwerksteil kommen folglich herkömmliche Glas-Halbzeug-Bauelemente zum Einsatz.

Der Erfindung liegt die Aufgabe zugrunde, ein Bauelement als Trägerplatte für die Verkleidung von Oberflächen, insbesondere Außenwänden von Gebäuden, zur Verfügung zu stellen, welches in einfacher Weise die Befestigung von Verkleidungsplatten aus z. B. Glas ermöglicht.

Zur Lösung dieser Aufgabe lehrt die Erfindung ein Halbzeug-Bauelement für die Verkleidung einer Oberfläche eines Bauwerkes, z. B. einer Außenwand eines Gebäudes, bestehend aus einer Trägerplatte und einer einseitig auf die Trägerplatte aufgebrachten, elastischen Verbundmörtelschicht, mit den Merkmalen des Anspruches 1. Dabei ist die Verbundmörtelschicht derart ausgebildet, dass eine Verkleidungsplatte aus Glas, Gestein, Keramik oder Metall mit einem Kleber auf Zementbasis und/oder Silikatbasis auf die Trägerplatte aufklebbar ist.

Die Erfindung geht dabei von der Erkenntnis aus, dass sich alternativ zu den bekannten Glas-Halbzeugen auch herkömmliche Glasscheiben (ohne Verbundmörtelschicht) auf einfache und zuverlässige Weise an herkömmlichen Putzträgerplatten befestigen lassen, wenn die Putzträgerplatte unter Bildung eines Halbzeug-Bauelementes mit einer elastischen Verbundmörtelschicht außenseitig vorbeschichtet ist.

Bei der Verkleidungsplatte handelt es sich folglich um eine (einfache) Verkleidungsplatte (z.B. Glasplatte oder dergleichen), die - im Gegensatz zu den bekannten Glas-Halbzeugen mit eigener Verbundmörtelschicht - selbst nicht mit einer Verbundmörtelschicht versehen bzw. vorbeschichtet ist.

An der Außenwand des Gebäudes werden dann folglich nicht mehr lediglich herkömmliche Putzträgerplatten befestigt, sondern die erfindungsgemäßen Halbzeug-Bauelemente, welche als vorbeschichtete Putzträgerplatten ausgebildet sind, die auf ihrer Außenseite mit einer elastischen Verbundmörtelschicht versehen sind. Bei dieser elastischen Verbundmörtelschicht kann es sich um eine solche Verbundmörtelschicht handeln, die im Zusammenhang mit vorbeschichteten Glas-Halbzeugen bekannt ist. Da diese Verbundmörtelschicht nun jedoch Bestandteil des Trägerplattensystems und folglich gleichsam Bestandteil der Putzträgerplatte ist, können mit einem herkömmlichen Kleber, z. B. einem Fliesenkleber, einfache Glasscheiben befestigt werden. Damit wird folglich eine Alternative zu den bekannten vorbeschichteten Glas-Halbzeugen geschaffen.

Die äußere Beschichtung der Putzträgerplatte mit einer (elastischen) Verbundmörtelschicht hat den Vorteil, dass eine herkömmliche Glasscheibe, z. B. aus Floatglas oder aus Sicherheitsglas, mit einem Kleber an der vorbereiteten Fassade befestigt werden kann. Da die Verbundmörtelschicht ausreichend elastisch ist, werden Spannungen ausgeglichen, so dass Beschädigungen der Glasscheiben im Zuge von Ausdehnungen vermieden werden. Die Schichtdicke der Verbundmörtelschicht kann dabei in Abhängigkeit von dem Material der Verkleidungsplatte ausgewählt und folglich an dieses Material bzw. dessen Wärmeausdehnungskoeffizient angepasst werden. Dabei geht die Erfindung von der Erkenntnis aus, dass verschiedene Materialien der Verkleidungsplatte einen unterschiedlichen Wärmeausdehnungskoeffizienten haben können. Bei größerer Wärmeausdehnung wird man zum Zwecke der Rissüberbrückung eine größere Schichtdicke der Verbundmörtelschicht verwenden, denn die Rissüberbrückung ist proportional zur Schichtdicke. Die Schichtdicke der Verbundmörtelschicht beträgt bevorzugt 1 mm bis 5 mm, z. B. 2 mm bis 3 mm.

Es lassen sich in ästhetischer Hinsicht und funktioneller Hinsicht hervorragende Oberflächen realisieren, und zwar in montagetechnisch sehr einfacher Weise. Aufgrund der elastischen Ausgleichsfunktion der auf der Putzträgerplatte bereits vorbereiteten Verbundmörtelschicht kann gegebenenfalls auch auf ein Verfugen der einzelnen Glasscheiben verzichtet werden.

Bei der Ausgestaltung der elastischen Verbundmörtelschicht kann grundsätzlich auf die bekannten Erkenntnisse im Zusammenhang mit vorbeschichteten Glasplatten zurückgegriffen werden (vgl. z. B. DE 196 32 353 A1 und DE 10 2007 016 814 A1). So weist die auf die Trägerplatte aufgebrachte Verbundmörtelschicht vorzugsweise zumindest ein Bindemittel, z. B. Zement und/oder ein silikatisches Bindemittel und zumindest einen feinteiligen Zuschlagsstoff, z. B. Quarzsand, auf. Sie ist vorzugsweise mit Zuschlagswasser angemacht, das heißt es handelt sich um eine hydraulisch erhärtende bzw. hydraulisch abbindende Verbundmörtelschicht. Als Bindemittel kommt insbesondere Zement in Betracht. Alternativ können jedoch auch Ersatzstoffe, wie z. B. Kalk und/oder Hochofenschlacke zum Einsatz kommen. Die Erfindung umfasst auch silikatische Bindemittel. Bei dem Zuschlagsstoff handelt es sich vorzugsweise um einen feinteiligen neutralen Zuschlagsstoff, z. B. Quarzsand. Dabei weist die Verbundmörtelschicht zusätzlich zu der pulverförmigen Komponente (Bindemittel und Zuschlagsstoff) eine Polymerkomponente, z. B. eine wässrige Kunstharzdispersion, auf. Das bedeutet, dass die Verbundmörtelschicht bevorzugt mit einer wässrigen Kunstharzdispersion angemacht ist. So kann im Rahmen der Erfindung z. B. eine Verbundmörtelschicht aus einem feinteiligen neutralen Zuschlagsstoff und einem Bindemittel, z. B. Zement, verwendet werden, welche mit einer wässrigen Dispersion eines Polymers angemacht ist, wobei der Verbundmörtel auf der Glasscheibe z. B. mit Mangel an Hydratationswasser erhärtet ist. Beispielhaft wird auf die DE 196 32 353 A1 und DE 10 2007 016 814 A1 verwiesen.

Bei der Auswahl der Trägerplatten kann auf grundsätzlich bekannte Putzträgerplatten zurückgegriffen werden. Dabei sind die Trägerplatten als mineralisch gebundene Platten ausgebildet, z. B. auf Zementbasis und/oder Calciumsilikatbasis, oder es kommen Trägerplatten aus Blähglasgranulat zum Einsatz.

Besonders bevorzugt werden grundsätzlich bekannte Trägerplatten verwendet, die eine Trägerschicht, z. B. aus Zement oder Calciumsilikat, und einseitig oder beidseitig eine Armierungsschicht, z. B. ein Armierungsgewebe, aufweisen.

So kennt man z. B. eine handelsübliche Trägerplatte, die als Zementplatte ausgebildet ist und aus einem Kern aus Zement, z. B. Portlandzement, und Zuschlagsstoffen bestehen, die beidseitig mit einem Glasgittergewebe armiert ist. Diese kann in der erfindungsgemäßen Weise vorbeschichtet werden.

Das erfindungsgemäße Halbzeug-Bauelement mit Trägerplatte bzw. Putzträgerplatte und Verbundmörtelschicht kann auf verschiedensten Untergründen montiert werden. Das Halbzeug-Bauelement eignet sich auch besonders gut für die Verkleidung von unebenen Untergründen, da mit Hilfe der Verkleidungsplatte ein entsprechender Ausgleich erfolgen kann.

Bei der Verkleidungsplatte, die mittels eines Klebers auf dem Halbzeug-Bauelement befestigt wird, kann es sich besonders bevorzugt um eine Glasscheibe handeln, z. B. aus Floatglas oder Sicherheitsglas, z. B. Einscheibensicherheitsglas (ESG). Alternativ lassen sich auf dem erfindungsgemäßen Halbzeug-Bauelement aber auch Verkleidungsplatten aus Stein bzw. Gestein (z. B. Kalksandstein, Granit oder Marmor) befestigen. Ferner besteht die Möglichkeit, Verkleidungsplatten aus Keramik (Feinsteinzeug) oder auch aus Metall, z. B. Edelstahl, zu verwenden. Wichtig ist die Tatsache, dass diese Verkleidungsplatten (z.B. Glasplatten) als einfache Platten selbst nicht mit einer Verbundmörtelschicht versehen und folglich nicht als Glas-Halbzeuge ausgebildet sind.

Für den Verbund der Verkleidungsplatte (z. B. Glasscheibe) mit dem Halbzeug-Bauelement wird bevorzugt ein zementöser oder silikatischer Kleber verwendet, z. B. ein Fliesenkleber. Hier kann auf herkömmliche handelsübliche zementöse Kleber, z. B. Fliesenkleber, zurückgegriffen werden.

Gegenstand der Erfindung ist auch eine Bauwerksverkleidung mit einem Halbzeug-Bauelement der beschriebenen Art sowie ein Verfahren zum Verkleiden einer Oberfläche eines Bauwerkes, insbesondere einer Außenwand eines Gebäudes, mit einer Verkleidungsplatte aus Glas, Gestein, Keramik oder Metall. Das Verfahren zum Verkleiden einer Oberfläche mit einer solchen Verkleidungsplatte ist dadurch gekennzeichnet, dass (zunächst) ein Halbzeug-Bauelement der beschriebenen Art an der Außenwand befestigt wird und dass (anschließend) auf die mit der Verbundmörtelschicht versehene Außenseite des Halbzeug-Bauelementes zumindest eine Verkleidungsplatte der beschriebenen Art (z. B. Glasscheibe) mittels eines Klebers aufgeklebt wird.

Dabei wird man üblicherweise das Halbzeug-Bauelement in ähnlicher Weise wie eine herkömmliche Putzträgerplatte an der Oberfläche, z. B. der Außenwand eines Gebäudes, befestigen, z. B. durch Verklebung und/oder Verschraubung. Anschließend lassen sich dann herkömmliche Glasscheiben oder andere Verkleidungsplatten der beschriebenen Art (ohne "eigene" Verbundmörtelschicht) mit Hilfe eines Klebers auf die vorbeschichteten Putzträgerplatten aufkleben.

## Patentansprüche

1. Halbzeug-Bauelement für die Verkleidung einer Oberfläche eines Bauwerkes, z. B. einer Außenwand eines Gebäudes, bestehend aus
- einer Trägerplatte und
- einer einseitig auf die Trägerplatte aufgebrachten, elastischen Verbundmörtelschicht,
wobei die Verbundmörtelschicht derart ausgebildet ist, dass eine Verkleidungsplatte aus Glas, Gestein, Keramik oder Metall mit einem Kleber auf Zementbasis und/oder Silikatbasis auf die mit der Verbundmörtelschicht versehene Außenseite des Halbzeug-Bauelementes aufklebbar ist, wobei die Trägerplatte als mineralisch gebundene Putzträgerplatte auf Zementbasis und/oder Calciumsilikatbasis oder als Putzträgerplatte aus Blähglasgranulat ausgebildet ist, wobei die elastische Verbundmörtelschicht zumindest eine pulverförmige Komponente aus zumindest einem Bindemittel und einem Zuschlagstoff und zusätzlich eine Polymerkomponente aufweist.

2. Halbzeug-Bauelement nach Anspruch 1, **dadurch gekennzeichnet, dass** die Trägerplatte eine Trägerschicht aus z. B. Zement oder Calciumsilikat und einseitig oder beidseitig eine Armierungsschicht, z. B. ein Armierungsgewebe, aufweist.

3. Halbzeug-Bauelement nach Anspruch 1 oder 2, **dadurch gekennzeichnet, dass** die elastische Verbundmörtelschicht als Bindemittel, Zement und/oder ein silikatisches Bindemittel aufweist.

4. Halbzeug-Bauelement nach einem der Ansprüche 1 bis 3, **dadurch gekennzeichnet, dass** die elastische Verbundmörtelschicht als Zuschlagstoff Quarzsand aufweist und/oder mit Zuschlagswasser angemacht ist.

5. Halbzeug-Bauelement nach einem der Ansprüche 1 bis 4, **dadurch gekennzeichnet, dass** die Verbundmörtelschicht mit einer wässrigen Kunststoffdispersion angemacht ist.

6. Halbzeug-Bauelement nach einem der Ansprüche 1 bis 5, **dadurch gekennzeichnet, dass** die Verbundmörtelschicht auf der Trägerplatte mit Mangel an Hydratationswasser angemacht ist.

7. Halbzeug-Bauelement nach einem der Ansprüche 1 bis 6, **dadurch gekennzeichnet, dass** die Dicke der Verbundmörtelschicht 1 mm bis 5 mm beträgt, z. B. 2 mm bis 3 mm.

8. Bauwerksverkleidung mit einem Halbzeug-Bauelement nach einem der Ansprüche 1 bis 7 und mit einer Verkleidungsplatte aus Glas, Gestein, Keramik oder Metall, ohne Verbundmörtelschicht, welche mit einem Kleber auf Zementbasis und/oder Silikatbasis auf die Trägerplatte aufgeklebt ist.

9. Verfahren zum Verkleiden einer Oberfläche eines Bauwerkes, z. B. einer Außenwand eines Gebäudes, mit einer Verkleidungsplatte aus Glas, Gestein, Keramik oder Metall, **dadurch gekennzeichnet, dass** zumindest ein Halbzeug-Bauelement nach einem der Ansprüche 1 bis 7 an der Oberfläche befestigt wird und dass die nicht mit einer Verbundmörtelschicht versehene Verkleidungsplatte auf die mit der Verbundmörtelschicht versehene Außenseite des Halbzeug-Bauelementes mittels eines Klebers auf Zementbasis und/oder Silikatbasis aufgeklebt wird.

## Claims

1. A semi-finished construction element for cladding a building surface, for example an external wall of a building, consisting of
- a support board and
- an elastic bonding mortar layer applied to one side of the support board,
wherein the bonding mortar layer is designed such that a cladding board consisting of glass, rock, ceramics or metal can be glued to the outside surface of the semi-finished construction element, to which the bonding mortar layer has been applied, wherein the support board is configured as a mineral-bound plaster base board, which is based on cement or calcium silicate, or as a plaster base board consisting of expanded glass granulate, wherein the elastic bonding mortar layer comprises at least one powdery component consisting of at least one binding agent and an additive, and additionally a polymer component.

2. The semi-finished construction element according to claim 1, **characterised in that** the support board comprises a support layer consisting e.g. of cement or calcium silicate and a reinforcement layer, e.g. a reinforcement fabric on one side or on both sides.

3. The semi-finished construction element according to claim 1 or 2, **characterised in that** cement and/or a siliceous binding agent is used as a binding agent for the elastic bonding mortar layer.

4. The semi-finished construction element according to one of claims 1 to 3, **characterised in that** the elastic bonding mortar layer comprises quartz sand as an additive and/or is made up with added water.

5. The semi-finished construction element according to one of claims 1 to 4, **characterised in that** the bonding mortar layer is made up with an aqueous plastic dispersion.

6. The semi-finished construction element according to one of claims 1 to 5, **characterised in that** the bonding mortar layer on the support board is made up with lack of hydration water.

7. The semi-finished construction element according to one of claims 1 to 6, **characterised in that** the thickness of the bonding mortar layer is 1 mm to 5 mm, e.g. 2 mmm to 3 mm.

8. A building cladding with a semi-finished building component according to one of claims 1 to 7 and with a cladding board consisting of glass, rock, ceramics or metal, without a bonding mortar layer, which is glued to the support board using an adhesive based on cement and/or silicate.

9. A method for applying a cladding to a building surface such as an external wall of a building, with a cladding board consisting of glass, rock, ceramics or metal, **characterised in that** at least one semi-finished construction element according to one of claims 1 to 7 is attached to the surface, and **in that** the cladding board not provided with a bonding mortar layer is glued to the outside surface of the semi-finished construction element provided with the bonding mortar layer by means of an adhesive based on cement and/or silicate.

## Revendications

1. Élément de construction semi-fini destiné à habiller une surface d'un ouvrage de construction, par ex. un mur extérieur d'un bâtiment, composé
- d'un panneau porteur et
- d'une couche de mortier composite élastique, appliquée unilatéralement sur le panneau porteur,
la couche de mortier composite étant conçue de telle sorte qu'un panneau d'habillage en verre, en pierre, en céramique ou en métal puisse être collé avec un adhésif sur base de ciment et/ou sur base de silicate sur la face extérieure munie de la couche de mortier composite de l'élément de construction semi-fini, le panneau porteur étant conçu en tant que panneau porteur de crépi à liaison minérale sur base de ciment et/ou sur base de silicate de calcium ou en tant que panneau porteur de crépi en granulés de verre soufflé, la couche de mortier composite élastique comportant au moins un composant pulvérulent en au moins un agent liant et un agrégat et en supplément un composant polymère.

2. Élément de construction semi-fini selon la revendication 1, **caractérisé en ce que** le panneau porteur comporte une couche de support par ex. en ciment ou en silicate de calcium et unilatéralement ou bilatéralement une couche d'armature, par ex. un tissu d'armature.

3. Élément de construction semi-fini selon la revendication 1 ou 2, **caractérisé en ce que** la couche de mortier composite élastique comporte en tant qu'agent liant du ciment et/ou un agent liant silicaté.

4. Élément de construction semi-fini selon l'une quelconque des revendications 1 à 3, **caractérisé en ce que** la couche de mortier composite élastique comporte en tant qu'agrégat du sable silicieux et/ou est gâchée à l'eau.

5. Élément de construction semi-fini selon l'une quelconque des revendications 1 à 4, **caractérisé en ce que** la couche de mortier composite est gâchée avec une dispersion aqueuse de matière plastique.

6. Élément de construction semi-fini selon l'une quelconque des revendications 1 à 5, **caractérisé en ce que** la couche de mortier composite sur le panneau porteur est gâchée avec un manque d'eau d'hydratation.

7. Élément de construction semi-fini selon l'une quelconque des revendications 1 à 6, **caractérisé en ce que** l'épaisseur de la couche de mortier composite est de 1 mm à 5 mm, par ex. de 2 mm à 3 mm.

8. Habillage d'ouvrage de construction avec un élément de construction semi-fini selon l'une quelconque des revendications 1 à 7 et avec un panneau d'habillage en verre, en pierre, en céramique ou en métal, sans couche de mortier composite, lequel est collé sur le panneau porteur avec un adhésif sur base de ciment et/ou sur base de silicate.

9. Procédé destiné à habiller une surface d'un ouvrage de construction, par ex. un mur extérieur d'un bâtiment avec un panneau d'habillage en verre, en pierre, en céramique ou en métal, **caractérisé en ce qu'**on fixe au moins un élément de construction semi-fini selon l'une quelconque des revendications 1 à 7 sur la surface et **en ce qu'**on colle le panneau d'habillage non muni d'une couche de mortier composite sur la face extérieure munie de la couche de mortier composite de l'élément de construction semi-fini au moyen d'un adhésif sur base de ciment et/ou sur base de silicate.
